# DEMANDE DE BREVET EUROPEEN

(11) **EP 4 477 081 A1**
(43) Date de publication de la demande: **18.12.2024**
(21) Numéro de dépôt: 24176692.2
(22) Date de dépôt: 17.05.2024
(51) Int. Cl.: A01M 7/00

(54) **PROCÉDÉ DE CONTRÔLE DE LA CIRCULATION D'UN FLUIDE DANS UN SYSTÈME DE PULVÉRISATION**

(30) Priorité: 15.06.2023 FR 2306142
(71) Demandeur: Exel Industries, 51200 Epernay (FR)
(72) Inventeur: DEBOISSIEU, Cyril, 69220 CORCELLES EN BEAUJOLAIS (FR); DIJOUX, David, 01540 SAINT JULIEN SUR VEYLE (FR)
(74) Mandataire: Argyma

(57) **Abrégé**

La présente invention vise un procédé contrôlant la circulation de fluide dans un système de pulvérisation comportant une rampe comprenant une buse, des moyens d'alimentation, au moins un générateur à modulation de largeur d'impulsion d'un signal et un capteur de pression, ledit procédé comprenant les étapes suivantes :
a) fixer une pression de référence (Pr) ;
b) calculer un pourcentage de réduction de débit à appliquer en fonction de ladite pression (Pr), ledit pourcentage de réduction de débit correspondant au débit attendu ; puis
c) générer un signal de commande correspondant audit débit attendu ;
d) pulvériser un liquide, en mesurant la pression d'alimentation (Pt) de ladite buse ;
e) mesurer un débit de liquide d'alimentation de la rampe ;
f) déterminer le débit de liquide sortant de ladite buse
g) modifier la commande du générateur en fonction d'une comparaison entre le débit de liquide sortant déterminé et le débit attendu.

## Description

### DOMAINE TECHNIQUE

La présente invention a trait à un procédé automatique de détermination d'au moins un paramètre de modélisation d'un système de pulvérisation d'un fluide. Un tel fluide permet le traitement de sol ou de culture, il peut être un engrais ou un produit phytosanitaire par exemples.

### ETAT DE LA TECHNIQUE

Dans le domaine de la pulvérisation de fluide et en particulier de produit phytosanitaire sous forme liquide, pour le traitement de sol ou de culture, il est connu d'embarquer sur un véhicule motorisé, tel qu'un tracteur, un système de pulvérisation comprenant une rampe de pulvérisation. Les rampes de pulvérisation agricoles comprennent généralement des portes-buses répartis de manière uniforme sur toute la longueur de la rampe de pulvérisation, pour pulvériser du produit phytosanitaire sous forme liquide sur des rangs de végétaux au moyen de buses de pulvérisation.

Selon les prescriptions du fabricant de ce liquide, une certaine dose doit être appliquée par hectare et le débit du liquide à amener à la rampe est calculé en fonction de la largeur de travail de la rampe et de la vitesse de l'engin sur lequel est embarqué le système de pulvérisation. Il est connu d'adapter le débit de produit fourni à la rampe en fonction de la vitesse de l'engin, afin d'obtenir une dose à l'hectare aussi constante que possible.

Le débit de produit phytosanitaire fourni à la rampe peut être mesuré à l'aide d'un débitmètre qui opère une lecture directe du débit de liquide circulant dans une conduite d'alimentation de la rampe. Ce type de mesure impose de renseigner en permanence le nombre de buses de la rampe effectivement utilisées, ce nombre pouvant être variable au cours d'une opération de pulvérisation, notamment pour tenir compte de la géométrie réelle du champ en cours de traitement, ce champ n'étant pas forcément rectangulaire et n'ayant pas forcément une largeur multiple de la longueur totale de la rampe.

Il est connu du brevet FR2995179 que la pression du produit phytosanitaire fourni à la rampe peut, comme le débit dudit produit, être adaptée à la rampe en fonction de la vitesse de l'engin, afin d'obtenir une dose à l'hectare maîtrisée. Les technologies utilisées pour la régulation de pression sont différentes de celles utilisées pour la régulation de débit. La régulation de pression du produit phytosanitaire permet une meilleure précision de la pulvérisation qu'une régulation par débitmètre pour de faibles débits.

De plus, il peut être ajouté au système de pulvérisation des bobines à modulation de largeur d'impulsion permettant de conserver une pression constante du liquide pulvérisé au travers des buses, tout au long de la pulvérisation, tout en permettant la modulation du débit de liquide. Toutefois, lesdites bobines à modulation de largeur d'impulsion engendrent une non-linéarité entre la commande à largeur d'impulsion et le liquide pulvérisé par les buses. En fonction des besoins de l'utilisateur, le liquide pulvérisé peut varier, tout comme le type de buses. Ainsi la courbe de correction de la pulvérisation pour pallier cette non-linéarité du débit peut aussi varier en fonction du liquide pulvérisé ou du type de buse. Il n'est donc pas possible de connaitre et régler, en temps réel, la pulvérisation en fonction de l'utilisation spécifique.

L'invention vise à résoudre les inconvénients de l'état de la technique, notamment en proposant un procédé automatique de détermination d'au moins un paramètre de modélisation d'un système de pulvérisation d'un liquide intégrant un générateur à modulation de largeur d'impulsion d'un signal de commande permettant un travail de pulvérisation à pression constante mais à débit modulable, en temps réel, en fonction d'une utilisation spécifique.

### PRESENTATION DE L'INVENTION

Plus précisément, l'invention a pour objet un procédé de contrôle de la circulation de fluide dans un système de pulvérisation. En particulier, ledit système comporte une rampe de pulvérisation comprenant au moins une buse de pulvérisation, des moyens d'alimentation de ladite buse en liquide et au moins une unité de contrôle configurée pour commander les moyens d'alimentation en fonction d'une valeur de consigne de la pression d'alimentation de ladite au moins une buse en liquide. Ledit système de pulvérisation comporte au moins un générateur à modulation de largeur d'impulsion d'au moins un signal de commande et au moins un capteur de pression. Ledit procédé comprend les étapes suivantes :
a) fixer une pression de référence d'alimentation de ladite au moins une buse ;
b) calculer un pourcentage de réduction de débit à appliquer en fonction de ladite pression de référence au moyen de ladite unité de contrôle, ledit pourcentage de réduction de débit correspondant au débit attendu ; puis
c) générer un signal de commande correspondant audit débit attendu, au moyen de ladite unité de contrôle ;
d) pulvériser un liquide, en utilisant la pression de référence comme pression de consigne d'alimentation de ladite au moins une buse et en mesurant la pression d'alimentation de ladite au moins une buse ;
e) mesurer au moyen d'un débitmètre un débit de liquide d'alimentation de la rampe ;
f) déterminer le débit de liquide sortant de ladite au moins une buse ;
g) modifier la commande du générateur à modulation de largeur d'impulsion en fonction d'une comparaison entre le débit de liquide sortant déterminé et le débit attendu.

Avantageusement, le procédé comporte suite à l'étape e) et avant l'étape f) une étape e') mesurer au moyen d'un autre débitmètre un débit de retour de circulation continue, l'étape f) s'effectuant alors par la différence entre le débit d'alimentation mesuré et le débit de retour de circulation continue mesuré.

Le générateur à modulation de largeur d'impulsion d'un signal de commande permet une pulvérisation à pression constante et à débit modulable, en temps réel, en fonction du besoin.

Dans le cas d'une circulation de fluide non-continue dans le système de pulvérisation, le débitmètre mesure le débit de liquide d'alimentation de la rampe de pulvérisation. Le débit déterminé de liquide sortant de la buse ou des buses correspond, dans ce cas, au débit mesuré par le débitmètre, c'est-à-dire au débit de liquide alimentant la rampe car il n'y a pas de retour en cuve.

Le débit attendu correspond à un débit calculé, pré-enregistré et réajusté en fonction de données en temps réel tels que la vitesse, la dose par hectare, etc. La commande du générateur à modulation de largeur d'impulsion est donc modifiée en fonction de la comparaison entre le débit de liquide mesuré par le débitmètre alimentant la rampe de pulvérisation et le débit de liquide calculé. Ce débit calculé peut évoluer en fonction de différents paramètres, comme par exemple la vitesse d'avancement de l'engin agricole.

Dans le cas d'une circulation de fluide continue dans le système de pulvérisation, le débitmètre mesure le débit de liquide d'alimentation de la rampe de pulvérisation et l'autre débitmètre mesure le débit de liquide du retour de circulation continue, c'est-à-dire le débit du liquide qui n'a pas été pulvérisé par la buse ou les buses de pulvérisation. Le débit déterminé de liquide sortant de la buse ou des buses correspond, dans ce cas, à la différence entre le débit mesuré par premier débitmètre (celui mesurant le débit de liquide d'alimentation de la rampe de pulvérisation) et le débit mesuré par l'autre débitmètre (celui mesurant le débit de liquide du retour de circulation continue). Il est ainsi déterminé, en temps réel, le débit de liquide pulvérisé par la buse ou les buses de pulvérisation. La commande du générateur à modulation de largeur d'impulsion est donc modifiée en fonction de la comparaison entre le débit de liquide mesuré par le premier débitmètre alimentant la rampe de pulvérisation et le débit de liquide mesuré par l'autre débitmètre de retour de circulation continue.

Avantageusement, la rampe de pulvérisation du système de pulvérisation comporte une pluralité de buses de pulvérisation et le débit de liquide sortant déterminé lors de l'étape f) est déterminé pour l'ensemble de la rampe.

La pluralité de buses de pulvérisation permet de couvrir une superficie adaptable en fonction du besoin de l'utilisateur. Les buses de la pluralité de buses sont espacées les unes des autres, de sorte à couvrir ladite superficie mais leur espacement permet également de s'adapter au besoin, par exemple en permettant un espacement correspondant à l'espacement des rangs de culture de l'utilisateur pour permettre une pulvérisation sur rang ou une pulvérisation inter-rangs. Le débit de liquide sortant est déterminé pour l'ensemble de la rampe, c'est-à-dire qu'il est déterminé en temps réel, que ce soit dans le cas d'une circulation de fluide de manière continue dans le système de pulvérisation ou de manière non-continue, le débit de liquide pulvérisé par les buses de pulvérisation. La commande du générateur à modulation de largeur d'impulsion est donc modifiée en fonction de la comparaison entre le débit de liquide mesuré par le premier débitmètre alimentant la rampe de pulvérisation pour l'ensemble de la rampe et le débit de liquide calculé ou le débit de liquide mesuré par l'autre débit débitmètre de retour de circulation continue.

Avantageusement, un générateur à modulation de largeur d'impulsion d'au moins un signal de commande est associé à chacune des buses de la pluralité de buses de pulvérisation.

La commande individuelle de chacune des buses est donc permise.

Avantageusement, la rampe comporte au moins deux tronçons de rampe, chaque tronçon de rampe comportant au moins une buse de pulvérisation et en ce que les étapes b), c), d), e), f) et g) sont mises en oeuvre tronçon par tronçon.

La répartition par tronçon permet une pulvérisation adaptée au besoin de l'utilisateur et/ou en fonction du liquide à pulvériser.

Avantageusement, les étapes a) à g) sont répétées pour plusieurs valeurs de pression de référence.

Avantageusement, le procédé est mis en oeuvre de manière automatique au moyen d'un calculateur.

L'invention porte également sur un système de pulvérisation embarqué sur un engin roulant pour la mise en oeuvre d'un procédé tel que précédemment décrit. Le système de pulvérisation comporte :
- au moins une cuve de liquide à pulvériser ;
- au moins une rampe de pulvérisation comprenant au moins une buse de pulvérisation ;
- des moyens d'alimentation de la rampe à partir de ladite cuve ;
- un générateur à modulation de largeur d'impulsion d'au moins un signal de commande ;
- un capteur de la pression du liquide dans un conduit d'alimentation de la rampe ;
- un débitmètre configuré pour mesurer le débit de produit de traitement alimentant la rampe ;
- une unité de contrôle configurée pour :
   - déterminer le débit de liquide sortant de ladite au moins une buse ;
   - déterminer une valeur de consigne (Pc) de pression d'alimentation de la rampe en liquide à pulvériser en fonction, d'une part, d'une valeur de consigne de débit de liquide à pulvériser et, d'autre part, du débit de liquide sortant déterminé ; et
- commander les moyens d'alimentation de la rampe en fonction de la valeur de consigne de pression

Le système de pulvérisation de l'invention permet une pulvérisation du liquide selon le procédé décrit précédemment.

Avantageusement, le système comporte en outre un autre débitmètre de retour de circulation continue, l'unité de contrôle déterminant alors le débit de liquide sortant de ladite au moins une buse comme différence entre le débit de liquide d'alimentation de la rampe mesuré par le débitmètre et le débit de retour de circulation continue mesuré par l'autre débitmètre.

Avantageusement, la rampe de pulvérisation comprend une pluralité de buses de pulvérisation, un générateur à modulation de largeur d'impulsion d'au moins un signal de commande étant associé à chacune des buses de la pluralité de buses de pulvérisation.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est un schéma de principe du système de pulvérisation selon un premier mode de réalisation de l'invention ;
La figure 2 est schéma bloc du procédé de contrôle de la circulation de fluide du système de pulvérisation de la figure 1 ;
La figure 3 est un schéma de principe du système de pulvérisation selon un second mode de réalisation de l'invention ; et
La figure 4 est une variante du schéma bloc du procédé de contrôle de la circulation de fluide du système de pulvérisation de la figure 2.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un procédé de contrôle de la circulation de fluide dans un système de pulvérisation 1.

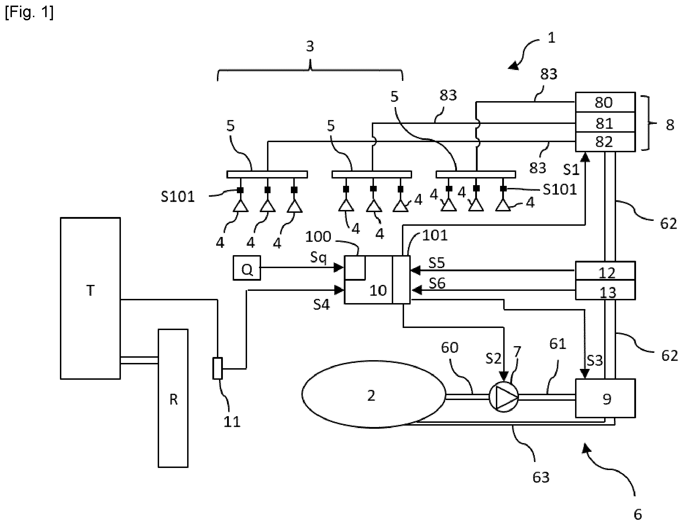

Selon un premier mode de réalisation de l'invention illustré sur la figure 1, le système de pulvérisation 1 comporte au moins une cuve 2 de liquide à pulvériser, une rampe de pulvérisation 3 et des moyens d'alimentation de la rampe de pulvérisation 3 à partir de la cuve 2.

La rampe de pulvérisation 3 est destinée à être portée ou trainée par un véhicule, en particulier un engin agricole, ici un pulvérisateur agricole.

La rampe 3 comporte un conduit principal 6 destiné à acheminer le liquide transmis par les moyens d'alimentation de la rampe de pulvérisation 3 à partir de la cuve 2, jusqu'à au moins une buse de pulvérisation 4 reliée à la rampe de pulvérisation 3.

Tel que cela est représenté sur la figure 1, la rampe de pulvérisation 3 comporte une pluralité de tronçons 5, ici trois tronçons 5, et une pluralité de buses de pulvérisation 4. Les buses de pulvérisation 4 sont réparties sur chacun des tronçons 5.

Dans un premier mode de réalisation, tel que représenté sur la figure 1, chaque tronçon 5 de la rampe de pulvérisation 3 comporte le même nombre de buses de pulvérisation 4, ici trois buses de pulvérisation 4.

Dans un autre mode de réalisation non illustré, les tronçons peuvent comporter un nombre de buses de pulvérisation différent.

En particulier, le conduit principal 6 relie la cuve 2 à un ensemble 8 d'électrovannes destinées à contrôler l'alimentation en liquide de la rampe de pulvérisation 3.

Le conduit principal 6 comprend une première portion de conduit 60 qui relie la cuve 2 à une pompe 7, par exemple une pompe volumétrique, une deuxième portion de conduit 61 qui relie la sortie de la pompe 7 et une vanne 9, qui alimente sélectivement une troisième portion de conduit 62 du conduit principal 6 ou un conduit 63 de retour de liquide à la cuve 2. La vanne 9 peut être une vanne trois voies ou une vanne deux voies.

L'ensemble 8 d'électrovannes comprend ici trois électrovannes une première électrovanne 80, une deuxième électrovanne 81, une troisième électrovanne 82, contrôlant respectivement la circulation du liquide du conduit principal 6 vers l'un des tronçons 5, à travers un tuyau 83.

A titre d'exemples, les électrovannes 80, 81, 82 peuvent être à clapet ou tout autre type.

Selon une variante non illustrée, les électrovannes de l'ensemble d'électrovannes 8 destinées à contrôler l'alimentation en liquide de la rampe de pulvérisation 3 sont remplacées par une nourrice qui alimente directement les buses de pulvérisation 4.

Le terme nourrice correspond à un dispositif tubulaire pourvu de connexions, permettant d'alimenter plusieurs circuits, ici plusieurs buses de pulvérisations, par chacune de ses connexions, depuis un point central.

Le système de pulvérisation 1 comporte en outre une unité de contrôle 10 capable de piloter l'ensemble d'électrovannes 8, la pompe 7,la vanne 9.

En particulier, l'unité de contrôle 10 est configurée pour émettre à destination de l'ensemble d'électrovannes 8 un signal de commande S1, à destination de la pompe 7 un signal de commande S2 et à destination de la vanne 9 un signal de commande S3.

L'unité de contrôle 10 comporte une mémoire 100 et un calculateur 101 configurés pour permettre la réalisation d'opérations logiques et arithmétiques.

Dans ce premier mode de réalisation, le système de pulvérisation 1 comporte en outre un générateur à modulation de largeur d'impulsion d'un signal de commande, un capteur de pression du liquide dans un conduit d'alimentation de la rampe 3 et un débitmètre 13.

L'unité de contrôle 10 est capable de piloter la commande du générateur à modulation de largeur d'impulsion.

Le système de pulvérisation 1 est monté sur un engin tel qu'un tracteur agricole T pourvu d'au moins une roue R.

Le système de pulvérisation 1 comprend un capteur 11 de rotation de la roue R qui transmet à l'unité de contrôle 10 un signal électrique S4 représentatif de la rotation de la roue R. Connaissant les dimensions de la roue R, l'unité de contrôle 10 peut en déduire la vitesse de déplacement du tracteur T ainsi que la distance parcourue depuis un point d'origine.

Selon une variante, la vitesse de déplacement du tracteur T peut être déterminée au moyen d'un radar ou d'un système de positionnement par satellite (GPS) par exemples.

Le système de pulvérisation 1 comporte un capteur 12 de mesure de la pression du liquide de traitement dans la troisième portion de conduit 62 du conduit principal 6.

Le débitmètre 13 est configuré pour détecter le débit de produit de traitement ou de liquide dans le conduit principal 6, alimentant la rampe de pulvérisation 3.

Le capteur 12 et le débitmètre 13 transmettent chacun un signal électronique S5, respectivement S6, à l'unité de contrôle 10.

Les signaux S1 à S6 peuvent être transmis par des lignes électriques ou par des moyens de communication sans fil, par exemple par radio.

Le générateur à modulation de largeur d'impulsion permet de conserver la pression du liquide circulant dans le conduit principal 6 tout en permettant de moduler son débit.

L'unité de contrôle 10 permet de piloter la pompe 7 et la vanne 9 en fonction d'une valeur de consigne de la pression d'alimentation de l'ensemble d'électrovannes 8 en produit de traitement liquide. Toutefois, la pompe 7 peut être, par exemple, pilotée manuellement par l'utilisateur. Ainsi, la mise en route de la pompe 7 et son pilotage peuvent être effectués par diverses moyens.

Le capteur de pression 12 permet d'adresser à l'unité de contrôle 10 un signal de retour, ou de contre-réaction, puisqu'il délivre un signal représentatif de la pression dans la troisième portion de conduit 62 du conduit principal 6, la pression dans cette troisième portion de conduit 62 pouvant être considérée comme égale à la pression d'alimentation de l'ensemble d'électrovannes 8.

La régulation utilisée dans le système de pulvérisation 1 est basée sur une modélisation du fonctionnement de chaque buse 4 où le débit en litres/minute est considéré comme proportionnel à la racine carrée de la pression en bars.

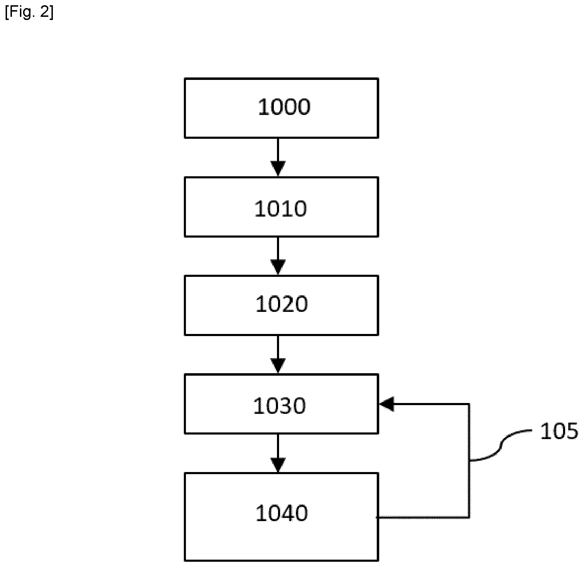

Lors de la mise en service du système de pulvérisation 1, on met en oeuvre le procédé représenté par le schéma bloc de la figure 2.

Dans une première étape 1000, une valeur est fixée pour une pression de référence Pr d'alimentation des buses 4.

Dans une deuxième étape 1010, l'unité de contrôle 10 calcule un pourcentage de réduction de débit à appliquer en fonction de la pression de référence Pr. Le pourcentage de réduction de débit correspond au débit attendu.

Le débit attendu correspond ici à un débit calculé, pré-enregistré. Ce débit peut être réajusté en fonction de données en temps réel tels que la vitesse, la dose par hectare, etc.

Puis, ladite unité de contrôle 10 génère un signal de commande S1 vers chaque tronçon 5 de rampe de pulvérisation 3, puis, chaque générateur à modulation de largeur d'impulsion associé à chacune des buses de pulvérisation 4 génère un signal de commande S101 avec une fréquence de hachage correspondant au débit attendu.

Il est à noter que le signal de commande généré par chaque générateur à modulation de largeur d'impulsion associé à chacune des buses de pulvérisation 4 peut être différent.

Dans une troisième étape 1020, le système de pulvérisation 1 pulvérise du liquide en utilisant la pression de référence Pr comme pression de consigne Pc d'alimentation des buses 4. En d'autres termes, la vanne 9 est pilotée pour alimenter les buses 4 avec une pression Pr délivrée à l'ensemble 8. On considère ici que la pression dans la troisième portion de conduit 62 est égale ou sensiblement égale à la pression d'alimentation des buses 4, les pertes de charge dans les vannes 80 à 82 et dans les conduits 83 étant prises en compte dans l'étalonnage préalable du capteur de pression 12.

Lorsque le système 1 fonctionne en régime établi, et alors que les buses 4 pulvérisent du liquide, le débitmètre 13 est utilisé pour mesurer le débit effectif total de liquide dans le conduit principal 6 de la rampe 3. Il fournit un signal correspondant S6 à l'unité de contrôle 10.

En même temps, tout au long l'étape 1020, le capteur 12 fournit à l'unité de contrôle 10 un signal S5 représentatif de la pression d'alimentation des buses 4. En fonctionnement établi, la valeur de la pression mesurée totale Pt transmise par le signal S5 doit être égale à la valeur de la pression de consigne Pc, aux tolérances de mesure près.

Dans une quatrième étape 1030, l'unité de contrôle 10 détermine le débit de liquide sortant des buses 4 comme étant le débit de liquide d'alimentation de la rampe. Cette détermination de débit s'effectue sur la base du signal S6.

Au terme de cette étape et au cours de l'étape 1040, le débit de liquide pulvérisé par les buses 4 est donc déterminé, en tenant compte de la valeur de la pression de référence Pr fixée à l'étape 1000, directement ou à travers la pression Pt, et pour l'ensemble de la rampe de pulvérisation 3, en considérant que les buses 4 se comportent toutes de la même façon.

A partir de la valeur représentative du débit de liquide pulvérisé par les buses précédemment calculée, le signal de commande du générateur à modulation de largeur d'impulsion est modifié en fonction du débit attendu qui est le débit calculé. La modification du signal de commande, autrement dit sa correction, est représentée par la référence numérique 105 sur la figure 2.

On remarque que le procédé de la figure 2 peut être réalisé de façon totalement automatique, au moyen d'un calculateur configuré en ce sens, puisqu'il suffit à l'opérateur de lancer l'étape 1000 pour que les étapes suivantes se déroulent automatiquement.

En outre, la sélection de la pression de référence à l'étape 1000 peut avoir lieu de façon automatique, sur la base d'une ou plusieurs valeurs stockées dans la mémoire 100. Par ailleurs, les étapes de pilotage et de calcul du procédé d'invention sont effectuées par le calculateur 101 et la ou les valeur(s) du débit calculé comme résultat de ce procédé est ou sont stockée(s) dans la mémoire 100, en vue d'une utilisation ultérieure.

En résumé, ce premier mode de réalisation correspond au cas où la circulation de fluide dans le système de pulvérisation 1 de manière non continue. Le débitmètre 13 mesure le débit de liquide d'alimentation de la rampe de pulvérisation 3. Le débit alors déterminé de liquide sortant des buses de pulvérisation 4 correspond au débit de liquide mesuré par le débitmètre 13, c'est-à-dire le débit de liquide alimentant la rampe de pulvérisation 3. Le débit attendu correspond ici à un débit calculé, pré-enregistré dans l'unité de contrôle 10. Il est ensuite comparé le débit mesuré par le débitmètre 13 avec ledit débit calculé. La commande du générateur à modulation de largeur d'impulsion est donc modifiée en fonction de cette comparaison entre le débit de liquide mesuré par le débitmètre 13 alimentant la rampe de pulvérisation 3 et le débit de liquide calculé.

Le débit calculé peut évoluer en fonction de différents paramètres, comme par exemple la vitesse d'avancement de l'engin agricole.

En variante, le débit de liquide pulvérisé par les buses 4 peut être déterminé pour chaque tronçon de rampe 5. Pour ce faire, les étapes 1000 à 1040 sont mises en oeuvre tronçon de rampe 5 après tronçon de rampe 5, en ouvrant et fermant sélectivement les électrovannes 80, 81, 82.

Cette approche augmente la précision de la détermination du débit de liquide pulvérisé par les buses 4 et, par voie de conséquence, de la correction obtenue grâce à l'unité 10 lorsque celle-ci pilote, la vanne 9 et l'ensemble 8, en tenant compte du signal de contre-réaction S5 délivré par le capteur 12.

Une valeur de consigne de dose de liquide à l'hectare Q peut être fournie à l'unité 10 sous la forme d'un signal électronique Sq, le calculateur 100 est capable de déterminer, à chaque instant en cours de fonctionnement du système 1, et en fonction de la largeur de travail de la rampe 3 et de la vitesse d'avance du tracteur T, un débit consigne instantané en produit à pulvériser.

Les étapes 1000, 1010, 1020, 1030, 1040 et 105 peuvent, aussi dans cette variante, être mises en oeuvre de manière totalement automatique.

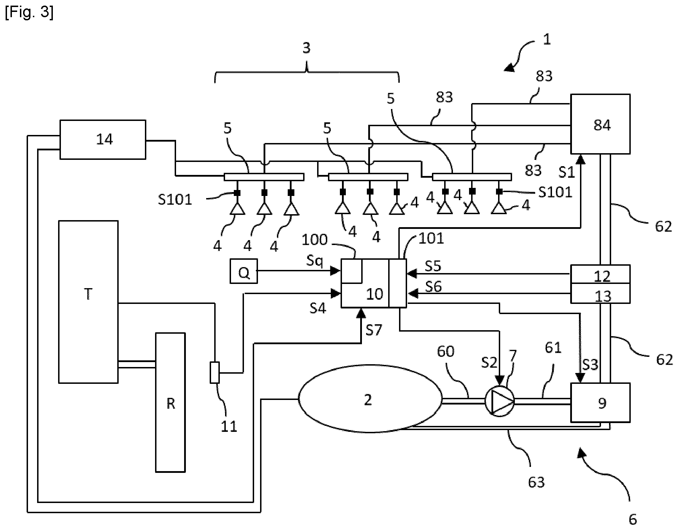

Un second mode de réalisation de l'invention est représenté sur la figure 3.

Ce second mode correspond au cas d'une circulation de fluide de manière continue dans le système de pulvérisation 1.

Les parties communes entre le premier mode de réalisation et le second mode de réalisation présentent les mêmes références numériques.

Ce mode est semblable au premier mode de réalisation à l'exception que le conduit principal 6 relie la cuve 2 à une nourrice 84 destinée à contrôler l'alimentation en liquide de la rampe de pulvérisation 3, plutôt qu'un ensemble d'électrovannes.

Dans ce mode, le système de pulvérisation 1 comporte en outre un autre débitmètre 14.

Le débitmètre 14 est un débitmètre de retour de circulation continue et configuré pour détecter le débit de produit de traitement ou de liquide non pulvérisé par chaque tronçon de rampe 5, et donc par la rampe de pulvérisation 3.

Le débitmètre 14 transmet un signal électronique S7 à l'unité de contrôle 10.

Le signal S7, tout comme les signaux S1 à S6, peut être transmis par des lignes électriques ou par des moyens de communication sans fil, par exemple par radio.

Lors de la mise en service du système de pulvérisation 1, il est également mis en oeuvre le procédé représenté sur le schéma bloc de la figure 2.

Dans la première étape 1000, une valeur est fixée pour une pression de référence Pr d'alimentation des buses 4.

Dans la deuxième étape 1010, l'unité de contrôle 10 calcule un pourcentage de réduction de débit à appliquer en fonction de la pression de référence Pr. Le pourcentage de réduction de débit correspond au débit attendu.

Puis l'unité de contrôle 10 peut générer un signal de commande S1 vers chaque tronçon 5 de la rampe, puis, chaque générateur à modulation de largeur d'impulsion associé à chacune des buses de pulvérisation 4 génère un signal de commande S101 avec une fréquence de hachage correspondant au débit attendu.

Dans la troisième étape 1020, le système de pulvérisation 1 pulvérise du liquide en utilisant la pression de référence Pr comme pression de consigne Pc d'alimentation des buses 4. En d'autres termes, la vanne 9 est pilotée pour alimenter les buses 4 avec une pression Pr délivrée à la nourrice 84. On considère ici que la pression dans la troisième portion de conduit 62 est égale ou sensiblement égale à la pression d'alimentation des buses 4, les pertes de charge dans la nourrice 84 et dans les conduits 83 étant prises en compte dans l'étalonnage préalable du capteur de pression 12.

Lorsque le système 1 fonctionne en régime établi, et alors que les buses 4 pulvérisent du liquide, le débitmètre 13 est utilisé pour mesurer le débit effectif total de liquide dans le conduit principal 6 de la rampe 3. Il fournit un signal correspondant S6 à l'unité de contrôle 10.

En même temps, tout au long l'étape 1020, le capteur 12 fournit à l'unité de contrôle 10 un signal S5 représentatif de la pression d'alimentation des buses 4. En fonctionnement établi, la valeur de la pression mesurée totale Pt transmise par le signal S5 doit être égale à la valeur de la pression de consigne Pc, aux tolérances de mesure près.

De plus, le débitmètre 14 est utilisé pour mesurer le débit de liquide de retour en circulation continue. Il fournit le signal électronique S7 à l'unité de contrôle 10.

Dans l'étape 1030, l'unité de contrôle 10 détermine le débit de liquide sortant des buses 4 comme différence entre le débit de liquide d'alimentation de la rampe 3 et le débit de retour de circulation continue. Cette détermination de débit s'effectue sur la base des signaux S6 et S7.

Au terme de cette étape et au cours de l'étape 1040, le débit de liquide pulvérisé par les buses 4 est donc déterminé, en tenant compte de la valeur de la pression de référence Pr fixée à l'étape 1000, directement ou à travers la pression Pt, et pour l'ensemble de la rampe de pulvérisation 3.

A partir de la valeur représentative du débit de liquide pulvérisé par les buses précédemment calculée, le signal de commande du générateur à modulation de largeur d'impulsion est modifié en fonction du débit attendu qui est le débit pulvérisé. La modification du signal de commande, autrement dit sa correction, est représentée par la référence numérique 105 sur la figure 2.

On remarque que le procédé de la figure 2 peut être réalisé de façon totalement automatique, au moyen d'un calculateur configuré en ce sens, puisqu'il suffit à l'opérateur de lancer l'étape 1000 pour que les étapes suivantes se déroulent automatiquement.

En outre, la sélection de la pression de référence à l'étape 1000 peut avoir lieu de façon automatique, sur la base d'une ou plusieurs valeurs stockées dans la mémoire 100. Par ailleurs, les étapes de pilotage et de calcul du procédé d'invention sont effectuées par le calculateur 101 et la ou les valeur(s) du débit calculé comme résultat de ce procédé est ou sont stockée(s) dans la mémoire 100, en vue d'une utilisation ultérieure.

En résumé, ce second mode de réalisation correspond au cas d'une circulation de fluide de manière continue dans le système de pulvérisation 1. Le débitmètre 13 mesure le débit de liquide d'alimentation de la rampe de pulvérisation 3 et l'autre débitmètre 14 mesure le débit de liquide du retour de circulation continue, c'est-à-dire le débit du liquide qui n'a pas été pulvérisé par les buses de pulvérisation. Le débit déterminé de liquide sortant de la buse 4 correspond, dans ce cas, à la différence entre le débit mesuré par premier débitmètre 13 (celui mesurant le débit de liquide d'alimentation de la rampe de pulvérisation 3) et le débit mesuré par l'autre débitmètre 14 (celui mesurant le débit de liquide du retour de circulation continue). Il est ainsi déterminé, en temps réel, le débit de liquide pulvérisé par les buses de pulvérisation 4. La commande du générateur à modulation de largeur d'impulsion est donc modifiée en fonction de la comparaison entre le débit de liquide mesuré par le premier débitmètre 13 alimentant la rampe de pulvérisation 3 et le débit de liquide mesuré par l'autre débitmètre 14 de retour de circulation continue.

Ainsi, l'invention permet un travail de pulvérisation à pression constante et à débit modulable, en temps réel, en fonction d'une utilisation spécifique. La différence entre les deux mesures de débit calculées d'une part entre un débit calculé et un débit d'alimentation de rampe ou d'autre part entre un débit mesuré par un premier débitmètre 13 et un deuxième débitmètre 14 permet de déterminer le liquide pulvérisé par les buses 4, en temps réel. Aussi, il est comparé le débit attendu de liquide pulvérisé avec le débit de liquide réellement pulvérisé, une correction de la commande du générateur à modulation peut alors être faite pour que les deux débits correspondent. Par conséquent, la pulvérisation est adaptable au type de liquide pulvérisé, au type de buse, à la géométrie réelle du champ, etc.

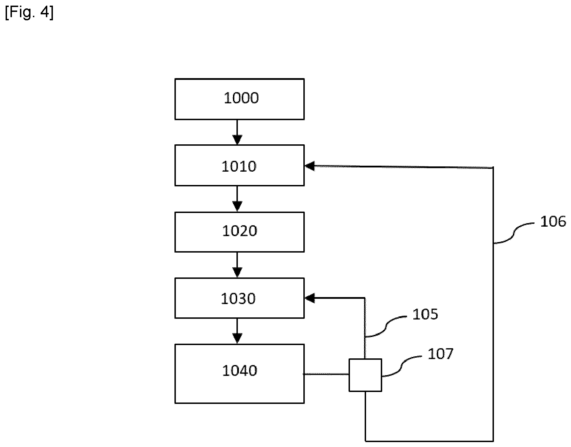

Par ailleurs et tel qu'illustré sur la figure 4, qu'il s'agisse du premier ou du second mode de réalisation, le rapport cyclique peut varier de 30% à 90%. La référence 107 illustre l'étape intermédiaire au cours de laquelle la valeur des pulsations est déterminée et comparée aux valeurs des bornes 30% et 80%. Si le résultat du calcul du correctif de ladite commande ne tend pas vers ces bornes, alors la modification du signal de commande, autrement dit sa correction, est opérée (référence 105). Si le résultat du calcul du correctif de ladite commande tend vers ces bornes, la valeur de la pression de consigne Pc est recalculée (référence 106) et le procédé retourne à l'étape 1010.

On notera par ailleurs que l'invention n'est pas limitée aux modes de réalisation décrits précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Procédé de contrôle de la circulation de fluide dans un système de pulvérisation, ledit système comportant une rampe de pulvérisation comprenant au moins une buse de pulvérisation, des moyens d'alimentation de ladite buse en liquide et au moins une unité de contrôle configurée pour commander les moyens d'alimentation en fonction d'une valeur de consigne (Pc) de la pression d'alimentation de ladite au moins une buse en liquide, ledit système de pulvérisation comportant au moins un générateur à modulation de largeur d'impulsion d'au moins un signal de commande et au moins un capteur de pression, ledit procédé comprenant les étapes suivantes :
a) fixer une pression de référence (Pr) d'alimentation de ladite au moins une buse ;
b) calculer un pourcentage de réduction de débit à appliquer en fonction de ladite pression de référence (Pr) au moyen de ladite unité de contrôle, ledit pourcentage de réduction de débit correspondant au débit attendu ; puis
c) générer un signal de commande correspondant audit débit attendu, au moyen de ladite unité de contrôle ;
d) pulvériser un liquide, en utilisant la pression de référence (Pr) comme pression de consigne (Pc) d'alimentation de ladite au moins une buse et en mesurant la pression d'alimentation (Pt) de ladite au moins une buse ;
e) mesurer au moyen d'un débitmètre un débit de liquide d'alimentation de la rampe ;
f) déterminer le débit de liquide sortant de ladite au moins une buse ;
g) modifier la commande du générateur à modulation de largeur d'impulsion en fonction d'une comparaison entre le débit de liquide sortant déterminé et le débit attendu.

2. Procédé selon la revendication 1, comportant suite à l'étape e) et avant l'étape f) une étape e') mesurer au moyen d'un autre débitmètre un débit de retour de circulation continue, l'étape f) s'effectuant alors par la différence entre le débit d'alimentation mesuré et le débit de retour de circulation continue mesuré.

3. Procédé selon l'une quelconque des revendications précédentes, dans lequel la rampe de pulvérisation du système de pulvérisation comporte une pluralité de buses de pulvérisation et le débit de liquide sortant déterminé lors de l'étape f) est déterminé pour l'ensemble de la rampe.

4. Procédé selon la revendication précédente, dans lequel un générateur à modulation de largeur d'impulsion d'au moins un signal de commande est associé à chacune des buses de la pluralité de buses de pulvérisation.

5. Procédé selon la revendication 1, dans lequel la rampe comporte au moins deux tronçons de rampe, chaque tronçon de rampe comportant au moins une buse de pulvérisation et en ce que les étapes b), c), d), e), f) et g) sont mises en oeuvre tronçon par tronçon.

6. Procédé selon la revendication précédente, dans lequel les étapes a) à g) sont répétées pour plusieurs valeurs de pression de référence (Pr).

7. Procédé selon l'une quelconque des revendications précédentes, **caractérisé en ce qu'**il est mis en oeuvre de manière automatique au moyen d'un calculateur.

8. Système de pulvérisation embarqué sur un engin roulant pour la mise en oeuvre d'un procédé selon l'une quelconque des revendications précédentes, ledit système de pulvérisation comportant :
- au moins une cuve de liquide à pulvériser ;
- au moins une rampe de pulvérisation comprenant au moins une buse de pulvérisation ;
- des moyens d'alimentation de la rampe à partir de ladite cuve ;
- un générateur à modulation de largeur d'impulsion d'au moins un signal de commande ;
- un capteur de la pression du liquide dans un conduit d'alimentation de la rampe ;
- un débitmètre configuré pour mesurer le débit de produit de traitement alimentant la rampe ;
- une unité de contrôle configurée pour :
- déterminer le débit de liquide sortant de ladite au moins une buse ;
- déterminer une valeur de consigne (Pc) de pression d'alimentation de la rampe en liquide à pulvériser en fonction, d'une part, d'une valeur de consigne de débit de liquide à pulvériser et, d'autre part, du débit de liquide sortant déterminé ; et
- commander les moyens d'alimentation de la rampe en fonction de la valeur de consigne de pression.

9. Système de pulvérisation selon la revendication précédente, comportant en outre un autre débitmètre de retour de circulation continue, l'unité de contrôle déterminant alors le débit de liquide sortant de ladite au moins une buse comme différence entre le débit de liquide d'alimentation de la rampe mesuré par le débitmètre et le débit de retour de circulation continue mesuré par l'autre débitmètre.

10. Système de pulvérisation selon l'une quelconque des revendications 8 et 9, dans lequel la rampe de pulvérisation comprend une pluralité de buses de pulvérisation, un générateur à modulation de largeur d'impulsion d'au moins un signal de commande étant associé à chacune des buses de la pluralité de buses de pulvérisation.
